# DEMANDE DE BREVET EUROPEEN

(11) **EP 1 132 723 A1**
(43) Date de publication de la demande: **12.09.2001**
(21) Numéro de dépôt: 01400169.7
(22) Date de dépôt: 19.01.2001
(51) Int. Cl.: G01F 23/02, G01F 23/292

(54) **Dispositif de contrôle du niveau d'un liquide dans un récipient fermé**

(30) Priorité: 21.01.2000 FR 0000745
(71) Demandeur: Merceron M.G.D. M.C.C.R., 86100 Chatellerault (FR)
(72) Inventeur: Merceron, Jean-Jacques, 86220 Vaux sur Seine (FR)
(74) Mandataire: Laget, Jean-Loup

(57) **Abrégé**

Dispositif de contrôle du niveau d'un liquide dans un récipient fermé.

Un périscope 8 a sa première extrémité placée au niveau nominal 4 du liquide dans le récipient 1 et sa deuxième extrémité 9 placée à l'extérieur du récipient 1.

## Description

L'invention concerne un dispositif de contrôle du niveau d'un liquide dans un récipient fermé.

Pour le transport des produits pétroliers liquides, il est d'usage d'utiliser des récipients étalonnés par un service officiel au moyen d'instruments de mesure. Les récipients de transport sont de préférence disposés sur des citernes de transports portant plusieurs récipients de volumes différents. Chacun de ces récipients est étalonné et porte, à l'intérieur, une échelle graduée, et un repère visible correspondant au niveau nominal du récipient.

Lors de la livraison à un poste d'utilisation ou de distribution, il était d'usage d'ouvrir le capot du trou d'homme prévu sur le dessus du récipient et de constater visuellement que le niveau du liquide correspondait bien au niveau nominal du récipient.

Désormais, une réglementation interdit d'ouvrir le capot du trou d'homme pour éviter le rejet de gaz dans l'atmosphère.

La vérification visuelle du niveau du liquide est donc impossible.

Un but de l'invention est de permettre une vérification indirecte du niveau du liquide dans le récipient avant la livraison.

L'invention a pour objet un ispositif de contrôle du niveau d'un liquide dans un récipient fermé, comportant un périscope, dont la première extrémité est placée au niveau nominal du liquide dans le récipient et dont la deuxième extrémité est placée à l'extérieur du récipient, de façon que le contrôle soit exercé de l'extérieur du récipient, caractérisé en ce que le périscope comporte à sa première extrémité une caméra vidéo susceptible de transférer l'image à un écran, et que sa deuxième extrémité est reliée à une boîte de transfert d'image vers un écran.

Selon un autre caractéristique, lorsque le récipient comporte un trou d'homme fermé par un capot, le périscope est monté à travers le capot.

D'autres caractéristiques ressortent de la description qui suit, faite avec référence au dessin annexé dans lequel :

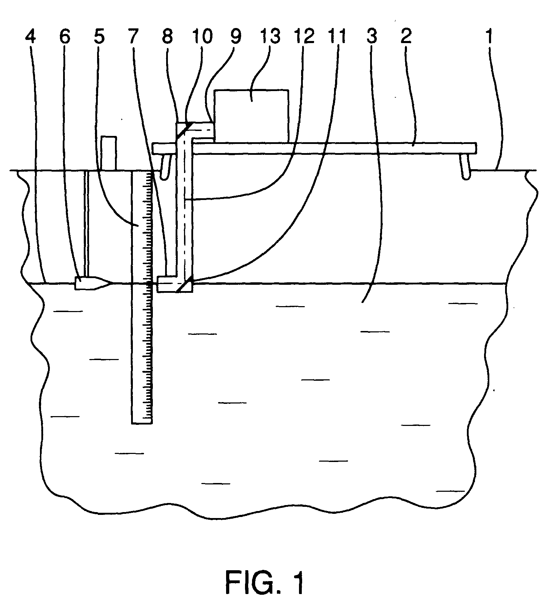

- la figure 1 est une vue schématique en coupe verticale partielle d'un exemple de réalisation d'un dispositif de contrôle du niveau d'un liquide, selon l'invention .

Sur la figure 1, un récipient 1 est symbolisé par sa paroi supérieure seule visible et comportant un trou d'homme fermé par un capot 2. Dans le récipient 1 est transporté un liquide 3, par exemple un carburant pour moteur thermique, dont le niveau nominal 4 est prédéterminé par rapport à une règle graduée fixe 5 et fixé par un repère 6 le cas échéant.

A son poste de chargement, le récipient est rempli de liquide jusqu'à son niveau nominal 4. Ensuite, le capot 2 du trou d'homme est plombé, et il ne peut être ouvert au poste de livraison.

Le récipient 1 contient un nombre déterminé de litres de liquide, qui doit être intégralement déchargé au poste de livraison.

Pour permettre une vérification du volume de liquide avant la livraison, un périscope 8 est monté à travers le capot 2 du trou d'homme.. La première extrémité 7 du périscope 8 est placée au niveau nominal 4 du liquide, au voisinage de la règle graduée 5, de façon à permettre une lecture du niveau sur la règle 5. Eventuellement, cette lecture est confortée par l'observation du repère 6.

La deuxième extrémité 9 du périscope 8 est placée au-dessus du capot 2. Elle peut être accessible à un observateur pour une vérification visuelle indirecte du niveau du liquide. Dans ce cas, le périscope 8 est simplement muni de miroirs 10, 11, assurant l'orientation des rayons lumineux le long du chemin optique 12.

La deuxième extrémité 9 du périscope 8 peut aussi être reliée à une boîte 13 de transfert d'image vers un écran disposé par exemple dans la cabine du tracteur ou dans un boîtier placé sur le châssis porteur du récipient, pour être à hauteur d'homme, par exemple.

Dans un tel cas, l'image transmise par le périscope peut être saisie par une caméra vidéo et affichée sur un écran.

Selon une variante de réalisation, la caméra est placée à la première extrémité 7 du périscope et l'image est transférée sur l'écran.

Comme le récipient 1 est clos et en général métallique, une source d'éclairement de la règle graduée 5 est avantageusement prévue dans le récipient 1, ou dans le périscope 8.

L'invention n'est pas limitée à l'exemple de réalisation décrit, dont les différents constituants peuvent être remplacés par des équivalents techniques. En particulier, le périscope a été décrit traversant le capot du trou d'homme, mais il peut être monté traversant la paroi du récipient.

## Revendications

1. Dispositif de contrôle du niveau d'un liquide dans un récipient fermé, comportant un périscope (8), dont la première extrémité (7) est placée au niveau nominal (4) du liquide dans le récipient (1) et dont la deuxième extrémité (9) est placée à l'extérieur du récipient, de façon que le contrôle soit exercé de l'extérieur du récipient, caractérisé en ce que le périscope (8) comporte à sa première extrémité (7) une caméra vidéo susceptible de transférer l'image à un écran, et que sa deuxième extrémité (9) est reliée à une boîte (13) de transfert d'image vers un écran.

2. Dispositif selon la revendication 1, caractérisé en ce que lorsque le récipient (1) comporte un trou d'homme fermé par un capot (2), le périscope (8) est monté à travers le capot (2).
